# EUROPÄISCHE PATENTSCHRIFT

(11) **EP 2 031 256 B1**
(45) Veröffentlichungstag und Bekanntmachung des Hinweises auf die Patenterteilung: **11.07.2012**
(21) Anmeldenummer: 08013095.8
(22) Anmeldetag: 21.07.2008
(51) Int. Cl.: F15B 11/028, A01B 63/10

(54) **Hubwerk und Verfahren zum Ansteuern eines Hubwerkes**
Lifting device and method for operating a lifting device
Dispositif de levage et procédé de commande d'un dispositif de levage

(30) Priorität: 29.08.2007 DE 102007040877
(43) Veröffentlichungstag der Anmeldung: 04.03.2009
(73) Patentinhaber: Robert Bosch GmbH, 70184 Stuttgart (DE)
(72) Erfinder: Jessen, Soenke, 71732 Tamm (DE)
(74) Vertreter: Thürer, Andreas

(56) Entgegenhaltungen:
- DE-A1- 3 628 427
- DE-A1-102005 005 314
- DE-A1-102006 004 423
- DE-C1- 19 939 796

## Beschreibung

Die Erfindung betrifft ein Hubwerk gemäß dem Oberbegriff des Patentanspruches 1 und ein Verfahren zum Ansteuern eines Hubwerkes.

Moderne Traktoren übernehmen neben ihrer herkömmlichen Aufgabe als Zugmaschine auch die Energieversorgung und Steuerung von an ein Hubwerk angehängten oder aufgesattelten Geräten. Diese letztgenannte Funktion wird zum einen von einer Zapfwelle des Traktors oder von der Arbeitshydraulik wahrgenommen. Bei Traktoren der mittleren und oberen Leistungsklasse kommen bei der Arbeitshydraulik zunehmend elektrisch ansteuerbare Wegeventile für die Steuerung der Arbeitsfunktionen der Anbaugeräte zum Einsatz. Die Steuerung dieser hydraulischen Funktionen erfolgt üblicherweise über einen kompakten Steuerblock, bei dem die Steuerung mit allen wesentlichen Wege- und Regelventilen zu einer Einheit zusammengefasst ist. Ein derartiger, für die so genannte elektrohydraulische Hubwerksregelung (EHR) vorgesehener Steuerblock ist beispielsweise im Datenblatt RD 66 125/09.04 (EHR-Ventile) der Bosch Rexroth AG beschrieben.

In der DE 10 2005 005 314 A1 ist ein doppeltwirkendes Hubwerk beschrieben, mit dem ein Anbaugerät aktiv in Richtung "Heben" (Tragen) oder in Richtung "Drücken" (Absenken) ansteuerbar ist. Der Arbeitsbereich "Tragen" tritt beispielsweise beim Pflügen oder Grubbern auf. Der Arbeitsbereich "Drücken" wird beispielsweise beim aktiven Pflugeinziehen oder bei einem Packer eingestellt. In einer lastfreien Zwischenstellung, in der das Hubwerk nicht mit einer Kraft beaufschlagt ist, liegt das Arbeitsgerät aufgrund seines Eigengewichtes auf dem Boden auf. Diese Zwischenstellung wird in einer Schwimmstellung des Hubwerksventils eingestellt.

Der in Richtung "Drücken" wirksame Druck wird bei der bekannten Lösung über ein proportional verstellbares Druckbegrenzungsventil anhand der Einstellung des Fahrers und dem Betriebszustand der EHR begrenzt.

Bei einigen Anwendungen, beispielsweise beim Mähen ist eine Anpassung der Auflagekraft des Gerätes wünschenswert. So soll beispielsweise ein Mähwerk mit sehr geringer Last aufliegen, da dadurch die Grasnabe nicht beschädigt wird und auch eine Kraftstoffeinsparung ermöglicht wird.

Zur Regelung eines derartigen Entlastungsdruckes wird in der DE 36 28 427 A1 und der DE 195 41 190 A1 vorgeschlagen, den in Richtung "Tragen" wirksamen Druck über ein proportional verstellbares Druckbegrenzungsventil zu begrenzen, so dass der Entlastungsdruck den voreingestellten Maximaldruck nicht überschreiten kann. Nachteilig bei der letztgenannten Lösung ist, dass bei dieser Entlastungsdruckregelung ein großer Druckmittelvolumenstrom über die aufgesteuerte Zumessblende des Hubwerkventils und über das Druckbegrenzungsventil zum Tank abströmt und somit zum Einen Druckmittel erwärmt wird und zum Anderen hydraulische Energie verschwendet wird. Bei der erstgenannten Druckschrift besteht das Problem, dass ich der Schneepflug nicht absenken kann und somit der Bodenkontur nicht folgen kann.

Aus der DE 199 39 796 C1 ist eine hydraulische Steueranordnung für den Hubzylinder des Auslegers eines Baggers bekannt, bei der die Druckmittelpfade zwischen einer Hauptpumpe, einem Tank und einem kolbenstangenseitigen und einem kolbenstangenabseitigen Druckraum des Hubzylinders gesteuert werden. An eine von dem Wegeventil zu dem kolbenstangenabseitigen Druckraum des Hubzylinders führenden Leitung ist ein verstellbares Druckbegrenzungsventil angeschlossen. Im normalen Betrieb ist das Druckbegrenzungsventil nicht aktiv. Das Wegeventil wird von einem hydraulischen Vorsteuergerät angesteuert, dessen Druckmittelversorgung eine Hilfspumpe gewährleistet.

In einem Betrieb, in dem die Auflagekraft des Löffels auf den Boden reduziert ist (Lastkompensationsbetrieb), ist das Druckbegrenzungsventil aktiv. Ein Schaltventil trennt die fluidische Verbindung zwischen der einen Steuerseite des Wegeventils, bei deren Ansteuerung die Pumpe über das Wegeventil mit dem kolbenstangenabseitigen Druckraum des Hubzylinders verbunden ist, und dem Vorsteuergerät und verbindet die Steuerseite direkt mit dem Ausgang der Hilfspumpe. Das bedeutet aber, dass das Wegeventil voll durchgeschaltet ist. Der Entlastungs-Druckmittelvolumenstrom ist dann gleich der Fördermenge, auf die die Hauptpumpe eingestellt ist.

Besonders nachteilig an dieser Lösung ist, dass die Hauptpumpe im Lastkompensationsbetrieb nicht gleichzeitig zur Versorgung anderer gleichzeitig zu betreibender hydraulischer Verbraucher, wie zum Beispiel dem Stielzylinder oder dem Löffelzylinder genutzt werden kann.

Es sind auch Lösungen bekannt, bei denen eine Entlastungsdruckregelung durch Aufschalten von zwei Hydrospeichern in Abhängigkeit vom Signal eines Drucksensors erfolgt. Bei alternativen Lösungen ist es vorgesehen, das Arbeitsgerät, beispielsweise ein Mähwerk über eine Federanordnung zu entlasten. Derartige Lösungen sind sehr aufwendig und teuer und benötigen einen erheblichen Bauraum. Ein weiterer Nachteil der Federentlastung besteht darin, dass während des Arbeitsprozesses keine Veränderung der in Richtung "Tragen" wirksamen Kräfte möglich ist, so dass diese Systeme nicht die für hochwertige Traktoren gewünschte Flexibilität aufweisen.

Demgegenüber liegt der Erfindung die Aufgabe zugrunde, ein Hubwerk und ein Verfahren zum Ansteuern eines Hubwerkes zu schaffen, bei dem eine Entlastung mit geringem vorrichtungstechnischen und energetischen Aufwand möglich ist.

Diese Aufgabe wird hinsichtlich des Hubwerkes durch die Merkmalskombination des Patentsanspruches 1 und hinsichtlich des Verfahrens durch die Merkmalskombination des nebengeordneten Patentanspruches 11 gelöst.

Erfindungsgemäß ist das Hubwerk mit einer elektrohydraulischen Hubwerksregelung ausgeführt, wobei ein in Richtung "Tragen" wirksamer Druckraum eines Hubzylinders über ein stetig verstellbares Wegeventil mit einer verstellbaren Zumessblende mit Druckmittel versorgt ist. Erfindungsgemäß ist in einer Vorlaufleitung zwischen der Zumessblende und dem in Richtung "Tragen" wirksamen Druckraum ein proportional verstellbares Entlasten-Druckbegrenzungsventil vorgesehen, über das der Druck in der Vorlaufleitung in Abhängigkeit von Betriebszuständen des Hubwerkes veränderbar ist, wobei ein Steuergerät der Hubwerksregelung derart ausgelegt ist, dass zur Entlastungsdruckregelung die Zumessblende auf einen vergleichsweise geringen Entlastungsvolumenstrom einstellbar ist, so dass der über das Entlasten-Druckbe-grenzungsventil abströmende Druckmittelvolumenstrom minimiert ist.

Eine derartige Lösung lässt sich mit sehr geringem Aufwand realisieren, wobei keine Drucksensoren, Druckspeicher oder Federanordnungen zur Entlastung erforderlich sind. Das System lässt sich mit sehr geringem Bauraum bei minimalen Kosten realisieren, wobei aufgrund des geringen, über das Entlasten-Druckbegrenzungsventil abströmenden Druckmittelvolumenstroms auch die Energieverluste gegenüber den eingangs beschriebenen Lösungen minimiert sind.

Nach dem erfindungsgemäßen Verfahren wird entsprechend die Zumessblende während der Entlastungsdruckregelung zugesteuert, um die Energieverluste zu minimieren.

Erfindungsgemäß wird es bevorzugt, wenn die elektrohydraulische Hubwerksregelung als LS- oder LUDV-System ausgeführt ist, wobei der Zumessblende eine Individualdruckwaage zugeordnet ist.

Optional kann das Hubwerk mit einem zusätzlichen Drucksensor und ggf. zusätzlichen Hydrospeichern zur Durchführung einer herkömmlichen Druckregelung ausgeführt sein.

Das erfindungsgemäße Konzept lässt sich sowohl bei einfachwirkenden als auch bei doppeltwirkenden Hubwerken einsetzen.

Bei einem doppeltwirkenden Hubwerk kann auch der in Richtung "Drücken" wirksame Druck durch ein stetig verstellbares Drücken-Druckbegrenzungsventil begrenzt werden.

Erfindungsgemäß wird es bevorzugt, wenn der über die Druckbegrenzungsventile einstellbare Druckbereich im Bereich zwischen 5 und 230 bar liegt.

Das Entlasten-Druckbegrenzungsventil wird vorzugsweise mit fallender Kennlinie ausgelegt, so dass bei einem Stromausfall der maximale Druck eingestellt ist und somit das Arbeitsgerät zuverlässig abgestützt wird.

Die Entlastungsdruckregelung wird bei einem Ausführungsbeispiel über die Bedienperson an einem Bedienfeld manuell eingestellt.

Das Steuergerät der elektrohydraulischen Hubwerksregelung ist bei einem Ausführungsbeispiel so ausgelegt, dass eine Lage- und eine Entlastungsregelung gleichzeitig durchführbar sind.

Bei der erfindungsgemäßen Entlastungsdruckregelung kann beim Absenken des Hubwerkes zunächst die Individualdruckwaage gesperrt werden, so dass über diese kein Druckmittelvolumenstrom geführt wird. Das Wegeventil wird in Richtung "Senken" verstellt, und das Entlasten-Druckbegrenzungsventil auf seinen Maximaldruck eingestellt. Bei Erreichen einer vorbestimmten Solllage wird das Hubwerksventil auf "Tragen"/"Heben" umgestellt und der über die Bedienperson manuell eingestellte Entlastungsdruck am Entlasten-Druckbegrenzungsventil eingestellt, so dass die Entlastungsdruckregelung in der vorbestimmten Weise erfolgt.

Die vorgenannte Solllage kann bestimmt werden, indem zunächst ein an das Hubwerk angesetztes Arbeitsgerät abgesenkt wird bis es auf dem Boden aufliegt. Anschließend wird das Hubwerk mit erhöhtem Druckmittelvolumenstrom, d.h. durch Aufsteuern der Zumessblende für einen kurzen Zeitintervall angehoben und nach diesem kurzen Zeitintervall (beispielsweise 1 Sekunde) das Hubwerksventil auf den Entlastenvolumenstrom und das Entlasten-Druckbegrenzungsventil auf den vorgewählten Entlastungsdruck eingestellt.

Bei einem besonders komfortablen Regelverfahren kann der Entlastungsdruck in Abhängigkeit von einer Aufwärts- oder Abwärtsbewegung des Arbeitsgerätes in seiner Arbeitsposition - verursacht beispielsweise durch Bodenunebenheiten entsprechend erhöht oder verringert werden.

Prinzipiell ist es auch möglich, den über die Zumessblende eingestellten Entlastungsdruckmittelvolumenstrom in Abhängigkeit von der Hubwerkslagenänderung oder Hubwerksbewegung zu verändern.

Das erfindungsgemäße Hubwerk mit einem Entlasten-Druckbegrenzungsventil ermöglicht eine sehr effektive Schwingungsdämpfung. Dazu erfolgt zunächst eine Lageregelung des Hubwerks, um dieses in einer Sollstellung zu halten, gleichzeitig erfolgt die vorbeschriebene Entlastungsregelung in einer Entlastungssolllage, die etwas unterhalb der Sollstellung der Lageregelung liegt. D.h. die beiden Regelungen arbeiten in gewisser Weise gegeneinander, wobei über die Entlastungsdruckregelung das Druckbegrenzungsventil geöffnet wird, um das Hubwerk auf die etwas niedrigere Entlastungssolllage einzustellen. Dieser abströmende Druckmittelvolumenstrom ist jedoch aufgrund der Einstellung der Zumessblende vergleichsweise gering, so dass diese Energieverluste tolerabel sind.

Diese Schwingungsdämpfung muss über die Bedienperson manuell freigegeben werden oder wie bei der Heck-EHR-Schwingunsgdämpfung bei Transportstellung und Erreichen einer bestimmten Fahrgeschwindigkeit aktiviert werden.

Zur Ermittlung des Entlastungsdrucks während der Schwingungsdämpfung kann zunächst der Entlastungsdruck am Entlasten-Druckbegrenzungsventil solange verringert werden bis das Hubwerk absinkt. Anschließend wird der Entlastungsdruck dann um eine vorbestimmte Druckdifferenz erhöht und dieser Druckwert als Grundlage bei der Schwingungsdämpfung verwendet.

Aus Sicherheitsgründen wird die Entlastungsdruckregelung bei Betätigung eines externen Tasters oder dergleichen abgestellt.

Erfindungsgemäß wird es bevorzugt, wenn der Druckmittelvolumenstrom über die Zumessblende während der Entlastungsregelung auf weniger als 50 I/min, aber vorzugsweise etwa 10 I/min eingestellt wird.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 einen Hydraulikschaltplan eines doppelt wirkenden Hubwerks;
Figur 2 eine Prinzipdarstellung eines Bedienfelds für eine Entlastungsdruckregelung;
Figur 3 ein Ablaufschema zur Erläuterung der Entlastungsdruckregelung und
Figur 4 ein Ablaufschema einer Schwingungsdämpfung.

Die Erfindung wird im Folgenden anhand eines doppeltwirkenden Front- oder Heckhubwerks eines Traktors erläutert. Prinzipiell lässt sich das erfindungsgemäße Hubwerk und das erfindungsgemäße Verfahren auch bei anderen mobilen Arbeitsgeräten einsetzen.

Der Grundaufbau des doppeltwirkenden Hubwerks ist ausführlich in der DE 10 2005 005 314 A1 beschrieben, so dass hier nur auf die zum Verständnis der Erfindung wesentlichen Bauelemente eingegangen wird und im Übrigen auf die Offenbarung der genannten Druckschrift verwiesen wird.

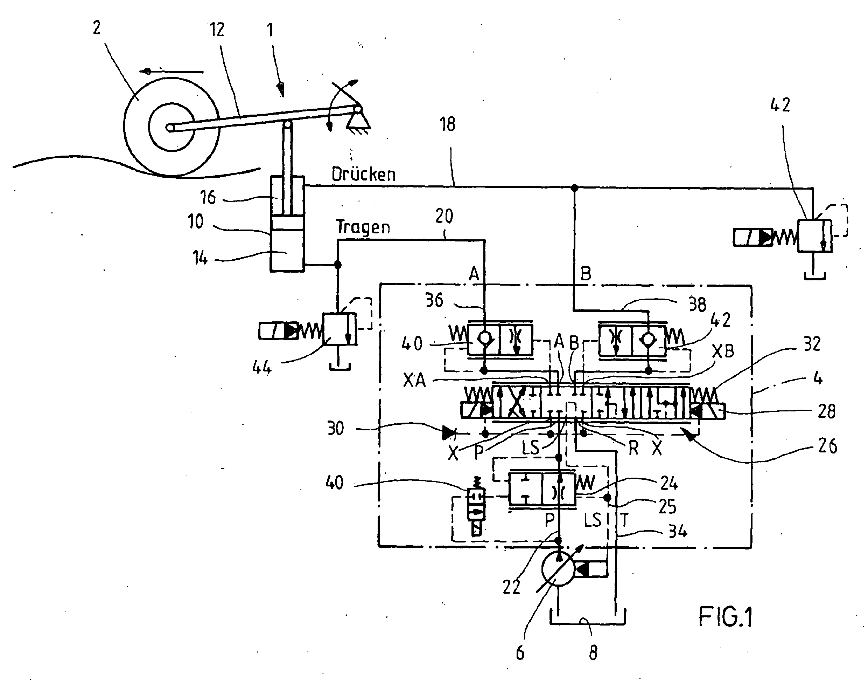

Gemäß dem in Figur 1 dargestellten Schaltplan wird von einem Hubwerk 1 eines Traktors ein Anbaugerät 2, beispielsweise ein Mähwerk getragen. Die Ansteuerung des Hubwerks 1 erfolgt über eine Hubwerksventilanordnung 4, über die in Richtung "Drücken" oder "Tragen" wirksame Druckräume des Hubwerks 1 mit einer Pumpe 6 oder einem Tank 8 verbindbar sind. Das Hubwerk 1 hat einen Hubzylinder 10, über den eine das Anbaugerät 2 tragende, am Traktor angelenkte Lenkeranordnung 12 zum Anheben oder Absenken des Anbaugerätes 2 verschwenkbar ist. Der Hubzylinder 10 hat einen in Richtung "Tragen" wirksamen Druckraum 14 und einen in Richtung "Absenken" wirksamen Ringraum 16, die jeweils über Arbeitsleitungen 18, 20 mit Arbeitsanschlüssen A, B der Hubwerksventilanordnung 4 verbunden sind.

Der Aufbau derartiger Hubwerksventile ist beispielsweise im Datenblatt RD 66 130/02.07 oder im eingangs genannten Datenblatt RD 66 165/09.04 der Bosch Rexroth AG beschrieben. Üblicherweise sind diese Hubwerksventilanordnungen in Scheibenbauweise ausgeführt und in dem Mobilsteuerblock integriert. Im dargestellten Ausführungsbeispiel ist das Hubwerksventil 4 als LS-Ventil ausgeführt - prinzipiell ist die Erfindung jedoch auch bei LUDV-Ventilen einsetzbar, wie sie beispielsweise in der DE 198 31 595 A1 beschrieben sind.

Das LS-Hubwerksventil 4 hat einen Druckanschluss P und einen Tankanschluss T, die mit der Pumpe 6 bzw. dem Tank 8 verbunden sind.

In einem an den Anschluss P angeschlossenen Zulaufkanal 22 ist eine LS-Druckwaage 24 angeordnet, die in Öffnungsrichtung von der Kraft einer Feder und dem Lastdruck des Hubzylinders 10 in einem LS-Kanal 26 und in Schließrichtung vom Druck stromabwärts der LS-Druckwaage 24 undbeaufschlagt ist. Der Zulaufkanal 22 führt zu einem Druckanschluss P eines stetig verstellbaren Wegeventils 26, das über eine Pilotventilanordnung 28 verstellbar ist. Diese besteht beispielsweise aus über einen Joystick ansteuerbare Pilotventilen, die an eine Steuerölversorgung 30 angeschlossen sind. Ein Ventilschieber des Wegeventils 28 ist über eine Zentrierfederanordnung 32 in eine Grundposition (0) vorgespannt, in der der Eingangsanschluss P sowie zwei Arbeitsanschlüsse A, B und Steueranschlüsse XA, XB, X abgesperrt sowie ein LS-Anschluss LS mit einem Rücklaufanschluss R verbunden ist. Der Rücklaufanschluss R ist über einen Ablaufkanal 34 mit dem Tankanschluss T der Hubwerksventilanordnung 4 verbunden.

Durch geeignete Einstellung der Pilotventilanordnung 28 kann das Wegeventil aus seiner dargestellten Grundposition (0) in Richtung von in Figur 1 mit (a) ("Drücken") gekennzeichneten Positionen verstellt werden, in denen über eine Zumessblende eine Druckmittelverbindung vom Eingangsanschluss P zum Arbeitsanschluss B aufgesteuert wird, so dass entsprechend Druckmittel in den Ringraum 16 des Hubzylinders 10 gefördert wird. Das aus dem Druckraum 14 verdrängte Druckmittel strömt über den aufgesteuerte Senkenmodul 40 und über den mit Rücklaufanschluss R verbundenen Arbeitsanschluss A zum Tank 8 ab. Beim Verstellen in die mit (b) ("Tragen") gekennzeichneten Positionen wird über die Zumessblende eine Druckmittelverbindung vom Druckanschluss P zum Arbeitsanschluss A und der Arbeitsanschluss B des Wegeventils 26 mit dem Rücklaufanschluss R verbunden, so dass entsprechend zum Anheben des Anbaugerätes Druckmittel in den Druckraum 14 gefördert und das aus dem Ringraum 16 verdrängte Druckmittel zum Tank 8 abströmt. Beim Verschieben des Ventilschiebers des Wegeventils 26 in seine mit (c) gekennzeichnete Schwimmstellung sind die beiden Arbeitsanschlüsse A, B des Wegeventils 26 und damit auch die beiden Druckräume 14, 16 des Hubzylinders 10 mit dem Rücklaufanschluss verbunden, so dass das Anbaugerät 2 lastfrei auf dem Boden aufliegt.

Die beiden Arbeitsanschlüsse A, B des Wegeventils 26 sind über einen Vorlaüfkanal 36 bzw. einen Ablaufkanal 38 mit den Arbeitsanschlüssen A, B der Hubwerksventilanordnung 4 verbunden. In den Kanälen 36, 38 ist jeweils ein Senkenmodul 40, 42 angeordnet, das in einer federvorgespannten Grundposition als entsperrbares Rückschlagventil zu leckölfreien Einspannung des Hubzylinders 10 und in Regelpositionen den vom Hubzylinder 10 zurückströmenden Druckmittelvolumenstrom im Sinne einer Ablaufregelung steuert. Hierzu ist jedes Senkenmodul 40, 42 in Richtung seiner Rückschlagposition vom Druck an dem zugeordneten Arbeitsanschluss A, B des Wegeventils 26 und in Richtung seiner Öffnungs-/Drosselposition durch den Steuerdruck der Steuerölversorgung 30 beaufschlagt.

Der individuelle Lastdruck am Hubzylinder 10 wird über den LS-Anschluss des Wegeventils 26 abgegriffen und beaufschlagt die Individualdruckwaage 24 - wie bereits erwähnt - in Öffnungsrichtung.

Zum Ausfahren des Hubzylinders 10 wird das Wegeventil 26 in Richtung seiner Tragen-Position (b) verstellt, so dass das Druckmittel über den Zulaufkanal 22, die Individualdruckwaage 24, die aufgesteuerte Zumessblende des Wegeventils 26, den Arbeitsanschluss A des Wegeventils 26, das Rückschlagventil des Senkenmoduls 40, den Vorlaufkanal 36 und die Arbeitsleitung 20 in den Druckraum 14 gefördert wird. Der Pumpendruck ist dabei so eingestellt, dass er stets um eine vorbestimmte Druckdifferenz oberhalb des höchsten Lastdrucks aller Verbraucher liegt (LS-System). Das beim Ausfahren des Hubzylinders 10 aus dem Ringraum 16 verdrängte Druckmittel strömt über die Arbeitsleitung 18, den Ablaufkanal 38, das über den Steuerdruck in der Steuerölversorgung 30 aufgesteuerte Senkenmodul 42, die Anschlüsse B, R des Wegeventils 26 und den Tankkanal 34 zum Tank 8 ab. Das Senkenmodul 42 wirkt dabei als Ablaufdruckwaage, über die der ablaufende Druckmittelvolumenstrom in gewissen Umfang geregelt wird.

Das Einfahren des Hubzylinders 10 und damit das Absenken des Anbaugerätes 2 aus einer oberen Hubwerkslage erfolgt entsprechend durch Verstellen des Wegeventils 26 in Richtung seiner Absenkposition (a).

Bei dem in Figur 1 dargestellten Ausführungsbeispiel kann die Individualdruckwaage 24 in ihre Schließposition fixiert werden, indem die in Schließrichtung wirksame Steuerfläche über ein elektrisch betätigtes 2/2-Wege-Pilotventil 40 mit dem Druck stromaufwärts der Individualdruckwaage 24 beaufschlagt wird, der - wie oben erwähnt - in jedem Fall größer als der Lastdruck am Hubzylinder 10 ist, so dass die Individualdruckwaage 24 zugehalten wird. Durch diese Maßnahme ist es möglich, trotz aufgesteuerter Zumessblende den Druckmittelströmungspfad zwischen Pumpe 6 und Wegeventil 26 abzusperren.

Der Druck in der Arbeitsleitung 18 kann über ein stetig verstellbares Drücken-Druckbegrenzungsventil 42 begrenzt werden, so dass der Druck im Ringraum 16 unabhängig von der Einstellung des Wegeventils 26 und von dem Pumpendruck, beispielsweise im Bereich zwischen 5 bis 230 bar einstellbar ist. Auf diese Weise kann beispielsweise durch Verstellen des Druckbegrenzungsventils 42 auf seinen Minimaldruck, beispielsweise 5 bar, das eigentlich doppeltwirkende Hubwerk 1 einfachwirkend betrieben werden, so dass das Anbaugerät 2 auch bei Einstellung des Wegeventils 26 in seine "Drücken"-Position (a) praktisch aufgrund seines Eigengewichtes absinkt. Nach dem Absenken kann das Wegeventil 26 dann in seine Schwimmstellung (c) verstellt werden, so dass eventuelle Unebenheiten des Bodens ausgeglichen werden können. Das eingestellte Verhalten entspricht dann demjenigen herkömmlicher einfach wirkender Hubwerksventile.

Bis hierhin entspricht der Aufbau des Hubwerks 1 demjenigen aus der Anmeldung DE 10 2005 005 314 A1.

Erfindungsgemäß ist in der Arbeitsleitung 20 ein Entlasten-Druckbegrenzungsventil 44 vorgesehen, das ebenfalls stetig verstellbar ausgeführt ist und über das der Druck in der Arbeitsleitung 20 beispielsweise auf Werte zwischen 5 bis 230 bar begrenzbar ist. Dieses Entlasten-Druckbegrenzungsventil 44 ermöglicht eine Entlastungsdruckregelung, die im Folgenden näher beschrieben wird.

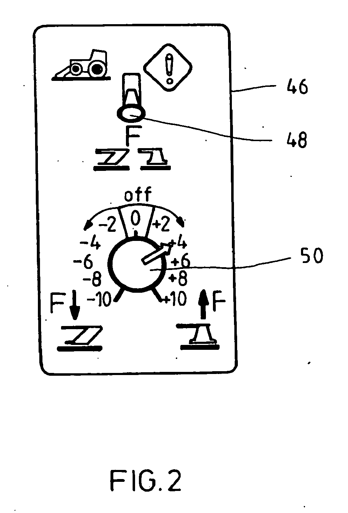

In Figur 2 ist ein Teil eines Bedienfeldes des Traktors dargestellt, über das das Entlasten-Druckbegrenzungsventil 44 zum Einstellen eines Maximaldrucks in der Arbeitsleitung 20 verstellt werden kann. Demgemäß hat dieses Bedienfeld 46 einen Schalter, über den die in der Folge beschriebene Entlastungsdruckregelung einstellbar ist (Schalter nach unten). Bei Verstellen des Schalters nach oben wird über das Entlasten-Druckbegrenzungsventil 44 der Maximaldruck eingestellt, so dass der Traktor, wie oben links in Figur 2 dargestellt, durch Absenken des Hubwerks 1 ausgehoben werden kann. Am Bedienfeld 46 ist des Weiteren ein Potentiometer 50 vorgesehen, über das bei einem doppeltwirkenden Hubwerk der über das "Drücken"-Druckbegrenzungsventil 42 begrenzbare Druck (Potentiometer nach links in Figur 2) oder der über das Entlasten-Druckbegrenzungsventil 44 in Richtung "Tragen" wirksame Druck einstellbar ist. In der Neutralstellung (0) des Potentiometers 50 wird das Hubwerk 1 einfachwirkend betrieben, d.h. der Druck in der Arbeitsleitung 18 wird auf den Minimalwert begrenzt. Demzufolge kann durch Verdrehen des Potentiometers 50 nach rechts in Figur 2 die Entlastungsdruckregelung aktiviert werden, wobei der Entlastungsdruck mit zunehmender Verstellung des Potentiometers 50 aus der Grundposition ansteigt.

Bei dem "normalen" Betrieb des Hubwerks 1 wird das Entlasten-Druckbegrenzungsventil 44 stets auf den maximalen Druck eingestellt, damit das Anbaugerät sicher getragen werden kann. Dabei ist das Potentiometer 50 in seine 0-Stellung eingestellt. Die Ansteuerung des Hubwerks 1 erfolgt in üblicher Weise nach einer Lage- und/oder Zugkraftregelung. Dieser maximale Entlastungsdruck wird auch bei einem Stopp der elektrohydraulischen Hubwerksregelung, bei einer Verriegelung der elektrohydraulischen Hubwerksregelung, beispielsweise bei einem Traktorstart, im Fehlerfall usw. und in der Transportstellung, die über einen Modusschalter eingestellt ist vom Steuergerät der Hubwerksregelung voreingestellt.

Das Entlasten-Druckbegrenzungsventil 44 ist mit einer abfallenden Kennlinie ausgeführt und über eine vergleichsweise starke Feder in Richtung des maximalen Drucks vorgespannt. Die Einstellung des zu begrenzenden Drucks erfolgt über einen proportional verstellbaren Elektromagneten 45, der entgegen der Feder wirkt. Derartige Druckbegrenzungsventile mit abfallender Kennlinie werden beispielsweise bei Lüfterantrieben für Kühlsysteme von Verbrennungsmotoren eingesetzt. Diesbezüglich sei beispielhaft auf die DE 43 21 637 A1 verwiesen.

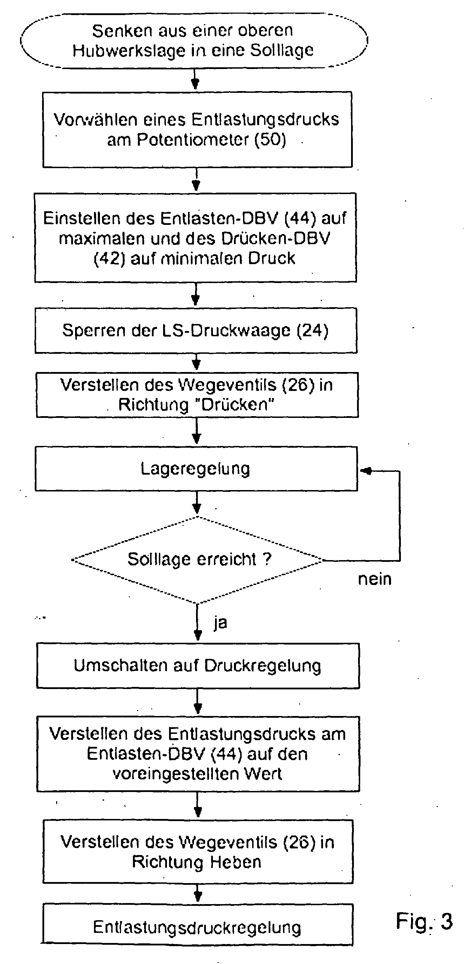

Es sei angenommen, dass sich das Anbaugerät 2 in einer oberen Hubwerkslage befindet. Ein Absenken des Anbaugeräts erfolgt dann zunächst lagegeregelt. Dabei wird über das Steuergerät das Entlasten-Druckbegrenzungsventil 44 unabhängig von der Einstellung des Potentiometers 50 auf einen Maximaldruck eingestellt (siehe Figur 3). Das Drücken-Druckbegrenzungsventil 42 wird über das Steuergerät auf seinen minimalen Druck eingestellt, so dass das Hubwerk 1 gemäß den vorstehenden Ausführungen sich wie ein einfach wirkendes Hubwerk verhält. Das Pilotventil 40 wird durch Bestromen des Schaltmagneten in seine Durchgangsstellung verstellt, so dass die in Schließrichtung wirksame Steuerfläche der Druckwaage durch den Pumpendruck beaufschlagt ist und die LS-Druckwaage 24 geschlossen gehalten wird - es kann somit kein Druckmittel über das Wegeventil 26 zum Hubzylinder 10 abströmen. Das Wegeventil 26 ist über die Bedienperson durch geeignete Einstellung der Pilotventilanordnung 28 in Richtung "Drücken" (a) verstellt, so dass der Hubzylinder 10 aufgrund des Eigengewichtes des Anbaugerätes 2 eingefahren wird und das Druckmittel aus dem sich verkleinernden Druckraum 14 über das Senkenmodul 40 und die geöffnete Druckmittelverbindung zwischen dem Arbeitsanschluss A und dem Rücklaufanschluss R des Wegeventils 26 zum Tank 8 hin abströmt. Dabei bleibt das Entlasten-Druckbegrenzungsventil 44 auf seinen Maximalwert eingestellt.

Wenn das Hubwerk 1 die Solllage erreicht hat, bei der es beispielsweise im vorherigen Arbeitsgang die Entlastungsdruckregelung verlassen hat, erfolgt das Umschalten vom lagegeregelten Absenken zur Druckregelung. Dafür wird das Entlasten-Druckbegrenzungsventil 44 sprungartig auf den von der Bedienperson am Potentiometer 50 eingestellten Druck und das Wegeventil 26 schnell von "Drücken" auf "Tragen" verstellt. Dadurch öffnet das Entlasten-Druckbegrenzungsventil 44 und das Hubwerk 1 wird relativ weich abgebremst und liegt dann mit dem über das Potentiometer 50 vorgegebenen Entlastungsdruck auf dem Boden auf. Dabei wird das Pilotventil 40 wieder in seine Sperrstellung gebracht, so dass die LS-Druckwaage 24 in die Regelposition verstellt wird, um den Druckabfall über der aufgesteuerten Zumessblende zwischen den Anschlüssen P und A des Wegeventils 26 lastunabhängig konstant zu halten. Die Zumessblende wird dabei während der Entlastungsregelung auf einen sehr kleinen Heben-Druckmittelvolumenstrom eingestellt, der beispielsweise bei etwa 10 I/min liegt.

Die Umschaltlage, in der von Lageregelung auf Druckregelung umgeschaltet wird, ist nicht notwendiger Weise exakt die vorherige Entlastungsdrucklage sondern liegt abhängig von der Senkengeschwindigkeit oberhalb davon. Dadurch ist ausreichend "Bremsweg" vorhanden, damit das Aufsetzen auf den Boden möglichst sanft erfolgt.

In dem Fall, in dem bei Einstellung der Entlastungsdruckregelung keine "Umschaltlage" aus dem vorhergehenden Arbeitsgang bekannt ist, wird diese "Umschaltlage" dadurch bestimmt, indem zunächst das Hubwerk 1 durch Verstellen des Wegeventils 26 in die "Drücken"-Position (a) abgesenkt wird, bis das Anbaugerät 2 mit seinem vollen Gewicht auf dem Boden aufliegt. Über die Sensoren der Lageregelung wird der Stillstand des Hubwerks 1 erfasst. Daraufhin wird das Wegeventil 26 in seine "Tragen"-Position (b) umgesteuert, wobei die Zumessblende relativ weit geöffnet wird, um das Hubwerk mit einem großen Druckmittelvolumenstrom anzuheben. Nach einem vorbestimmten kurzen Zeitintervall (etwa 1 Sekunde) wird die Zumessblende wieder auf den üblichen geringen Wert (beispielsweise 10 I/min) zurückgestellt und die Entlastungsdruckregelung in der vorbeschriebenen Weise durchgeführt.

Die Entlastungsdruckregelung wird beendet, wenn die EHR-Lageregelung kein Senken mehr vorgibt. Dies ist beispielsweise bei einem Stopp der Hubwerksregelung oder bei einer Verstellung des Lagesollwertes am Lagesollwertpotentiometer der Fall.

Die Einstellung einer Entlastungsdruckregelung ist nicht möglich, wenn sich das Hubwerk 1 in seiner Transportstellung befindet oder wenn über einen äußeren Taster betätigt wird. Die Unterbindung der Entlastungsdruckregelung bei betätigtem externen Taster ist deshalb wichtig, da bei einem "leichteren" Anbaugerät 2 und bei Einstellung der Entlastungsdruckregelung auf ein einem "schwereren" Anbaugerät entsprechenden Wert und bei Betätigung des Tasters in Richtung Absenken das Hubwerk 1 bei Erreichen der "vorherigen Lage" in die Entlastung schaltet und dann das Hubwerk 1 wieder nach oben bewegt wird, obwohl mit dem Taster eine Bewegung in Richtung "Senken" vorgegeben ist. Diese ungewollte Bewegung des Hubwerks ist sehr gefährlich und wird durch die Sicherheitsstrategie verhindert.

Prinzipiell ist es auch möglich, über das proportional verstellbare Wegeventil 26 den Senken-Druckmittelvolumenstrom zu steuern.

Bei dem vorbeschriebenen Ausführungsbeispiel ist das Entlasten-Proportionalventil 44 während Entlastungsdruckregelung auf einen konstanten Wert eingestellt. Es ist jedoch auch möglich, diesen über das Entlasten-Druckbegrenzungsventil 44 vorgegebenen Druck in Abhängigkeit von Betriebzuständen des Hubwerks 1 zu verändern.

So ist es beispielsweise denkbar, bei starken Lageänderungen des Hubwerks 1 die über den Lagesensor der Lageregelung erkennbar sind, den am Entlasten-Druckbegrenzungsventil 44 eingestellten Druckwert zu variieren. Er kann dann beispielsweise den Druck am Entlasten-Druckbegrenzungsventil 44 erhöhen, um eine Aufwärtsbewegung des Hubwerks zu unterstützen. Entsprechend kann eine Senkenbewegung des Hubwerks 1 durch Verringern des Drucks am Entlasten-Druckbegrenzungsventil 44 unterstützt werden. Dies ist besonders wichtig, da eine zu geringe Senkengeschwindigkeit in der Praxis problematisch ist, da beispielsweise hinter einer Bodenkuppe beim Mähen das Gras relativ hoch stehen bleibt. Dieses Kriterium wird bei der Beurteilung von Mähwerksaufhängungen in der Praxis als Qualitätskriterium berücksichtigt, so dass die erfindungsgemäße Strategie hier einen funktionalen Vorteil ermöglicht.

Es ist auch möglich, bei Lageänderungen des Hubwerks 1 über das Wegeventil 26 eine Volumenstromanpassung durchzuführen. Dadurch kann beispielsweise eine bessere Druckentlastung speziell bei schnellen Hebebewegungen durchgeführt werden. Bei herkömmlichen Hubwerken können diese schnellen Hebebewegungen häufig nicht durchgeführt werden, da das Druckmittel nicht schnell genug in den Druckraum 14 nachströmen kann.

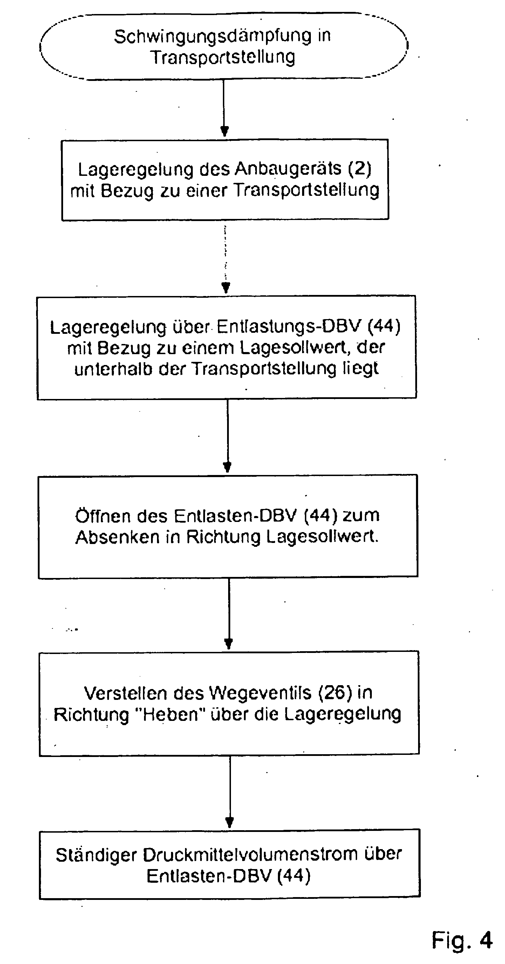

Gemäß Figur 4 kann über die erfindungsgemäße Hubwerksregelung auch eine effektive Schwingungsdämpfung realisiert werden. Grundgedanke dieser Schwingungsdämpfung ist, dass das Entlasten-Druckbegrenzungsventil 44 immer durchströmt ist und das Gewicht des Anbaugerätes 2 sozusagen auf dem geöffneten Entlasten-Druckbegrenzungsventil "schwebt". Realisiert ist dies durch zwei gegeneinander arbeitende Regelungen. Dabei hält eine Lageregelung das Anbaugerät 2 in seiner oberen Transportstellung. Mit dem Entlasten-Druckbegrenzungsventil 44 wird dann ebenfalls eine Lageregelung aktiviert, deren Lagesollwert etwas unterhalb der Transportstellung liegt. Dadurch öffnet das Entlasten-Druckbegrenzungsventil 44, so dass Druckmittel zum Tank 8 abströmen kann und das Hubwerk 1 in eine tiefere Position abgesenkt wird. Die Lageregelung der Transportstellung stellt das Wegeventil 26 dann wieder auf "Tragen" (b), wobei sich die beiden Druckmittelvolumenströme gegenseitig aufheben, so dass das Hubwerk 1 zwischen diesen beiden Lagesollwerten (Transportstellung und Lagesollwert der Lageregelung über das Entlasten-Druckbegrenzungsventil 44) "schwimmt" und ständig Druckmittel über das geöffnete Entlasten-Druckbegrenzungsventil abströmt.

Die Höhe dieses Druckmittelvolumenstroms hängt vom Abstand der beiden Lagesollwerte ab und lässt sich somit gut einstellen. Je höher dieser Druckmittelvolumenstrom ist, desto weicher und effektiver ist die Schwingungsdämpfung, allerdings geht diese Schwingungsdämpfung dann auch mit größeren Verlusten einher.

Prinzipiell ist es jedoch auch möglich, eine Dämpfung bei überwiegend geschlossenem Entlastungs-Druckbegrenzungsventil 44 durchzuführen. Praktische Versuche zeigten allerdings, dass diese Schwingungsdämpfung nicht so effektiv wie die vorbeschriebene Schwingungsdämpfung arbeitet. Die vorbeschriebene Schwingungsdämpfung kann nur in der Transportstellung und bei Einstellung einer "Dämpfung" am Bedienfeld aktiviert werden. Bei einer Verriegelung der EHR ist die Schwingungsdämpfung nicht aktivierbar.

Zum Einstellen des für die Schwingungsdämpfung erforderlichen Druckniveaus wird beim Start der Schwingungsdämpfung zunächst die Druckeinstellung des Entlasten-Druckbegrenzungsventils 44 in einer Rampe reduziert, wobei für eine 200 bar Reduzierung eine Zeit von etwa 4 Sekunden vorgesehen werden kann. Wenn dann am Lagesensor der Lageregelung erkannt wird, dass sich das Hubwerk 1 absenkt, ist die richtige Druckeinstellung für das Entlasten-Druckbegrenzungsventil 44 gefunden oder - genauer gesagt - bereits überschritten. Der am Entlasten-Druckbegrenzungsventil 44 eingestellte Druck wird dann um einen festen Druckwert erhöht und von diesem Basisdruckwert aus die Lageregelung mittels des Entlasten-Druckbegrenzungsventils 44 gestartet. Der Regler für diese Lageregelung mittels des Entlasten-Druckbegren-zungsventils 44 hat einen Proportional- und einen Integralanteil, wobei letzterer für den Ausgleich des bei der Drucksuche gemachten Fehlers sorgt.

Das erfindungsgemäße Konzept kann auch bei einfachwirkenden Hubwerken eingesetzt werden. Das Potentiometer 50 ist dann entsprechend nur in einer Richtung (rechts in Figur 2) verstellbar.

Offenbart sind ein Hubwerk und ein Verfahren zur Ansteuerung eines Hubwerks. Das Hubwerk hat ein stetig verstellbares Hubwerksventil mit einem Wegeventil, über das ein Hubzylinder mit einer Pumpe oder einem Tank verbindbar ist. Im Druckmittelströmungspfad vom Wegeventil zu einem in Richtung "Tragen" wirksamen Druckraum des Hubzylinders ist ein Entlasten-Druckbegrenzungsventil angeordnet, über das ein Entlastungsdruck proportional einstellbar ist. Während einer Entlastungsdruckregelung wird eine durch das proportional verstellbare Wegeventil vorgegebene Zumessblende zugesteuert, so dass der Druckmittelvolumenstrom über das Druckbegrenzungsventil zum Tank minimiert ist.

## Patentansprüche

1. Hubwerk eines landwirtschaftlichen Nutzfahrzeuges oder eines mobilen Arbeitsgerätes, das über eine elektrohydraulische Hubwerksregelung (EHR) verstellbar ist, wobei ein in Richtung "Tragen" wirksamer Druckraum (14) eines Hubzylinders (10) über ein stetig verstellbares Wegeventil (26) mit einer verstellbaren Zumessblende mit Druckmittel versorgbar ist, **gekennzeichnet durch** ein proportional verstellbares Entlasten-Druckbegrenzungsventil (44) in einer Vorlaufleitung (36, 20) zwischen der Zumessblende und dem Druckraum (14), über das der Druck in der Vorlaufleitung (36, 20) in Abhängigkeit von Betriebszuständen des Hubwerks veränderbar ist und **durch** ein Steuergerät, über das bei Entlastungsdruckregelung die Zumessblende auf einen vergleichsweise geringen Entlastungs-Druckmittelvolumenstrom einstellbar ist.

2. Hubwerk nach Patentanspruch 1, mit einer einem Wegeventil (26) vorgeschalteten LS-Druckwaage (24).

3. Hubwerk nach einem der vorhergehenden Patentansprüche, wobei dieses einfachwirkend ausgeführt ist.

4. Hubwerk nach einem der vorhergehenden Patentansprüche, mit einem Drucksensor zum Erfassen des Drucks in der Vorlaufleitung (36, 20).

5. Hubwerk nach Patentanspruch 1 oder 2 oder 3, 4, wobei ein in Richtung "Drücken" wirksamer Ringraum (16) des Hubzylinders (10) über das Wegeventil (26) mit Druckmittel versorgbar ist.

6. Hubwerk nach Patentanspruch 5, wobei in einer Rücklaufleitung (18, 28) zwischen dem Ringraum (16) und dem Wegeventil (26) ein Drücken-Druckbegrenzungsventil (42) angeordnet ist.

7. Hubwerk nach einem der vorhergehenden Patentansprüche, wobei das Druckbegrenzungsventil (44, 42) auf Drücke zwischen ca. 5 und ca. 230 bar einstellbar ist.

8. Hubwerk nach einem der vorhergehenden Patentansprüche, wobei das Entlasten-Druckbegrenzungsventil (44) eine fallende Kennlinie hat.

9. Hubwerk nach einem der vorhergehenden Patentansprüche, mit einem Bedienelement (50) eines Bedienfelds (46) zum manuellen Einstellen des Entlastungsdrucks.

10. Hubwerk nach einem der vorhergehenden Patentansprüche, mit einem Steuergerät, über das eine Hubwerks-Lageregelung und eine Entlastungs- oder Lageregelung über das Entlasten-Druckbegrenzungsventil (44) gleichzeitig durchführbar sind.

11. Verfahren zum Ansteuern eines Hubwerks (1), das einen mittels einer elektrohydraulischen Hubwerksregelung verstellbaren Hubzylinder (10) hat, dessen in Richtung "Tragen" wirksamer Druckraum (14) über ein Wegeventil (26) mit Zumessblende mit Druckmittel versorgt wird, wobei der Druck in einer Vorlaufleitung (20, 36) zwischen dem Druckraum (14) und der Zumessblende über ein proportional verstellbares Entlasten-Druckbegrenzungsventil (44) begrenzt wird, **dadurch gekennzeichnet, dass** zum Entlasten das Entlasten-Druckbegrenzungsventil (44) auf einen Entlastungsdruck eingestellt wird und die Zumessblende zur Verringerung des Druckmittelvolumenstroms auf einen vergleichsweise geringen Entlastungsvolumenstrom verkleinert wird.

12. Verfahren nach Patentanspruch 11, wobei ein Absenken und Entlasten des Hubwerks folgende Schritte aufweist:
- Sperren einer der Zumessblende vorgeschalteten LS-Druckwaage (24);
- Verstellen des Wegeventils (26) in Richtung "Drücken";
- automatisches Einstellen des Entlasten-Druckbegrenzungsventils (44) auf den maximalen Entlastungsdruck und bei Erreichen einer Solllage,
- Umschalten des Wegeventils (26) in Richtung "Tragen" und
- Einstellen eines vorgewählten niedrigeren Entlastungsdrucks am Entlastungs-Druckbegrenzungsventil (44).

13. Verfahren nach Patentanspruch 11 oder 12, wobei der Entlastungsdruck am Entlasten-Druckbegrenzungsventil (44) bei einer Aufwärtsbewegung des Hubwerks (1) angehoben und bei einer Abwärtsbewegung des Hubwerks (1) abgesenkt wird.

14. Verfahren nach einem der Patentansprüche 11 bis 13, wobei der Entlastungsvolumenstrom über die Zumessblende in Abhängigkeit von der Hubwerkslagenänderung oder Hubwerksgeschwindigkeit verändert wird.

15. Verfahren nach einem der Patentansprüche 11 bis 14, wobei zur Schwingungsdämpfung eine
- Lageregelung des vom Hubwerk (1) getragenen Anbaugerätes (2) mit Bezug zu einer Lageregelungs-Solllage und gleichzeitig eine
- Entlastungsregelung über das Entlasten-Druckbegrenzungsventil (44) mit Bezug zu einem Lagesollwert erfolgt, der etwas unterhalb der Lageregelungs-Transportstellung liegt durchgeführt wird.

16. Verfahren nach Patentanspruch 15, wobei die Lageregelungs-Solllage eine Transportstellung ist und zur Aktivierung der Schwingungsdämpfung ein entsprechendes Bedienelement betätigt werden muss.

17. Verfahren nach Patentanspruch 15 oder 16, wobei zur Ermittlung des Entlastungsdrucks bei der Schwingungsdämpfung zunächst der Entlastungsdruck am Entlasten-Druckbegrenzungsventil (44) verringert wird bis das Hubwerk (1) absinkt und anschließend der Entlastungsdruck am Entlasten-Druckbegrenzungsventil (44) um eine vorbestimmte Druckdifferenz erhöht wird.

18. Verfahren nach einem der Patentansprüche 11 bis 17, wobei die Entlastungsdruckregelung bei Betätigung eines externen Tasters abgestellt wird.

19. Verfahren nach einem der Patentansprüche 11 bis 18, wobei der Entlastungsvolumenstrom über die Zumessblende auf weniger als 50 l/min, vorzugsweise auf etwa 10 l/min eingestellt wird.

## Claims

1. Lifting device for an agricultural utility vehicle or a mobile working appliance, which is adjustable via an electrohydraulic lifting-device-regulating means (EHR), wherein a pressure chamber (14) in a lifting cylinder (10), which pressure chamber is effective in the "carrying" direction, can be supplied with pressure medium via a continuously adjustable directional control valve (26) with an adjustable meter-in variable restrictor, **characterized by** a proportionally adjustable relief pressure-limiting valve (44) in a flow line (36, 20) between the meter-in variable restrictor and the pressure chamber (14), via which relief pressure-limiting valve the pressure in the flow line (36, 20) can be varied as a function of operating states of the lifting device, and by a control unit via which, during relieving pressure regulation, the meter-in variable restrictor can be set to a comparatively low relieving pressure-medium volumetric flow.

2. Lifting device according to Patent Claim 1, with a load-sensing pressure balance (24) connected upstream of a directional control valve (26).

3. Lifting device according to either of the preceding patent claims, wherein said lifting device is of single-action design.

4. Lifting device according to one of the preceding patent claims, with a pressure sensor for sensing the pressure in the flow line (36, 20).

5. Lifting device according to Patent Claim 1 or 2 or 3, 4, wherein an annular chamber (16) in the lifting cylinder (10), which annular chamber is effective in the "dressing" direction, can be supplied with pressure medium via the directional control valve (26).

6. Lifting device according to Patent Claim 5, wherein a pressing pressure-limiting valve (42) is arranged in a return line (18, 28) between the annular chamber (16) and the directional control valve (26).

7. Lifting device according to one of the preceding patent claims, wherein the pressure-limiting valve (44, 42) can be set to pressures of between approx. 5 and approx. 230 bar.

8. Lifting device according to one of the preceding patent claims, wherein the relief pressure-limiting valve (44) has a falling characteristic.

9. Lifting device according to one of the preceding patent claims, with an operating element (50) in an operating panel (46) for the manual setting of the relieving pressure.

10. Lifting device according to one of the preceding patent claims, with a control unit via which a lifting-device position regulation and a relieving or position regulation can be carried out at the same time via the relief pressure-limiting valve (44).

11. Method for operating a lifting device (1) which has a lifting cylinder (10) which is adjustable by means of an electrohydraulic lifting-device-regulating means and the pressure chamber (14) in which, which pressure chamber is effective in the "carrying" direction, is supplied with pressure medium via a directional control valve (26) with a meter-in variable restrictor, wherein the pressure in a flow line (20, 36) between the pressure chamber (14) and the meter-in variable restrictor is limited via a proportionally adjustable relief pressure-limiting valve (44), **characterized in that**, for relief purposes, the relief pressure-limiting valve (44) is set to a relieving pressure and the meter-in variable restrictor is reduced to a comparatively low relieving volumetric flow in order to reduce the pressure-medium volumetric flow.

12. Method according to Patent Claim 11, wherein lowering and relief of the lifting device has the following steps:
- blocking a load-sensing pressure balance (24) connected upstream of the meter-in variable restrictor;
- adjusting the directional control valve (26) in the "pressing" direction;
- automatically setting the relief pressure-limiting valve (44) to the maximum relieving pressure and upon a desired position being reached,
- switching over the directional control valve (26) in the "carrying" direction, and
- setting a preselected, lower relieving pressure at the relieving pressure-limiting valve (44).

13. Method according to Patent Claim 11 or 12, wherein the relieving pressure at the relief pressure-limiting valve (44) is raised during an upwards movement of the lifting device (1) and is lowered during a downwards movement of the lifting device (1).

14. Method according to one of Patent Claims 11 to 13, wherein the relieving volumetric flow is changed via the meter-in variable restrictor as a function of the change in position of the lifting device or speed of the lifting device.

15. Method according to one of Patent Claims 11 to 14, wherein, in order to damp vibrations,
- position regulation of the mounted implement (2) carried by the lifting device (1) is carried out with respect to a position-regulation desired position and at the same time
- relieving regulation via the relief pressure-limiting valve (44) is carried out with respect to a position desired value lying somewhat below the position-regulation transport position.

16. Method according to Patent Claim 15, wherein the position-regulation desired position is a transport position and, in order to activate the damping of vibrations, a corresponding operating element has to be actuated.

17. Method according to Patent Claim 15 or 16, wherein, in order to determine the relieving pressure during the damping of vibrations, the relieving pressure at the relief pressure-limiting valve (44) is first of all reduced until the lifting device (1) drops and, subsequently, the relieving pressure at the relief pressure-limiting valve (44) is increased by a predetermined pressure differential.

18. Method according to one of Patent Claims 11 to 17, wherein the relieving pressure-regulating means is switched off upon actuation of an external pushbutton switch.

19. Method according to one of Patent Claims 11 to 18, wherein the relieving volumetric flow is set via the meter-in variable restrictor to less than 50 l/min, preferably to approximately 10 l/min.

## Revendications

1. Ensemble de levage pour engin agricole ou engin mobile, l'ensemble de levage pouvant être ajusté par l'intermédiaire d'une régulation électrohydraulique (EHR) de l'ensemble de levage, un espace (14) sous pression, actif dans la direction "porter", d'un vérin de levage (10) pouvant être alimenté en fluide sous pression par l'intermédiaire d'une soupape (26) ajustable progressivement et dotée d'un diaphragme ajustable de dosage,
**caractérisé par**
une soupape (44) de limitation de la pression au délestage, ajustable proportionnellement, prévue dans un conduit d'entrée (36, 20) entre le diaphragme de dosage et l'espace (14) sous pression et par laquelle la pression dans le conduit d'alimentation (36, 20) peut être modifiée en fonction des états de fonctionnement de l'ensemble de levage et
par un appareil de commande par lequel le diaphragme de dosage peut être ajusté à un débit volumique de délestage du fluide sous pression relativement petit lors de la régulation de la pression de délestage.

2. Ensemble de levage selon la revendication 1, doté d'un équilibreur de pression LS (24) raccordé en amont d'une soupape (26).

3. Ensemble de levage selon l'une des revendications précédentes, travaillant à simple effet.

4. Ensemble de levage selon l'une des revendications précédentes, doté d'un détecteur de pression qui détecte la pression qui règne dans le conduit d'alimentation (36, 20).

5. Ensemble de levage selon la revendication 1 ou 2 ou 3, 4, dans lequel un espace annulaire (16), actif dans la direction "pousser", du vérin de levage (10), peut être alimenté en fluide sous pression par l'intermédiaire de la soupape (26).

6. Ensemble de levage selon la revendication 5, dans lequel une soupape (42) de limitation de la pression en poussée est disposée dans un conduit de retour (18, 28) entre l'espace annulaire (16) et la soupape (26).

7. Ensemble de levage selon l'une des revendications précédentes, dans lequel la soupape (44, 42) de limitation de la pression peut être réglée à des pressions comprises entre environ 5 et environ 230 bars.

8. Ensemble de levage selon l'une des revendications précédentes, dans lequel la soupape (44) de limitation de la pression en délestage présente une ligne caractéristique descendante.

9. Ensemble de levage selon l'une des revendications précédentes, doté d'un élément (50) qui commande un champ de commande (46) permettant de régler manuellement la pression de délestage.

10. Ensemble de levage selon l'une des revendications précédentes, doté d'un appareil de commande par lequel une régulation de la position de l'ensemble de levage et une régulation du délestage ou de la position peuvent être exécutées simultanément par l'intermédiaire de la soupape (44) de limitation de la pression au délestage.

11. Procédé de commande d'un ensemble de levage (1) qui possède un vérin de levage (10) qui peut être ajusté au moyen d'une régulation électrohydraulique de l'ensemble de levage et dont l'espace (14) sous pression actif dans la direction "porter" est alimenté en fluide sous pression par l'intermédiaire d'une soupape (26) dotée d'un diaphragme de dosage, la pression qui règne dans un conduit d'entrée (20, 36) entre l'espace (14) sous pression et le diaphragme de dosage étant limitée par l'intermédiaire d'une soupape (44) de limitation de la pression au délestage, ajustable proportionnellement,
**caractérisé en ce que**
pour le délestage, la soupape (44) de limitation de la pression au délestage est réglée à une pression de délestage et le diaphragme de dosage est réduit pour diminuer le débit volumique de fluide sous pression à un débit volumique de délestage relativement petit.

12. Procédé selon la revendication 11, dans lequel l'abaissement et le délestage de l'ensemble de levage présentent les étapes suivantes :
- blocage d'un équilibreur de pression LS (24) raccordé en amont du diaphragme de dosage,
- placement de la soupape (26) dans la direction "pousser",
- ajustement automatique de la soupape (44) de limitation de la pression au délestage à la pression maximale de délestage et, lorsqu'une position de consigne est atteinte,
- basculement de la soupape (26) dans la direction "porter" et
- établissement d'une pression de délestage plus basse prédéterminée sur la soupape (44) de limitation de la pression au délestage.

13. Procédé selon la revendication 11 ou 12, dans lequel la pression de délestage sur la soupape (44) de limitation de la pression au délestage est relevée dans le cas d'un déplacement de l'ensemble de levage (1) vers le haut et est abaissée dans le cas d'un déplacement de l'ensemble de levage (1) vers le bas.

14. Procédé selon l'une des revendications 11 à 13, dans lequel le débit volumique au délestage est modifié par l'intermédiaire du diaphragme de dosage en fonction de la modification de la position de l'ensemble de levage ou de la vitesse de l'ensemble de levage.

15. Procédé selon l'une des revendications 11 à 14, dans lequel, pour amortir les oscillations, on exécute
- une régulation de position de l'appareil (2) porté par l'ensemble de levage (1) par rapport à une position de consigne de régulation de position et simultanément
- une régulation du délestage par l'intermédiaire de la soupape (44) de limitation de la pression au délestage en référence à une valeur de consigne de position située légèrement en dessous de la position de transport de la régulation de position.

16. Procédé selon la revendication 15, dans lequel la position de consigne de la régulation de position est une position de transport et dans lequel, pour activer l'amortissement des oscillations, un élément de commande approprié doit être actionné.

17. Procédé selon la revendication 15 ou 16, dans lequel, pour déterminer la pression de délestage lors de l'amortissement des oscillations, la pression de délestage est d'abord diminuée sur la soupape (44) de limitation de la pression au délestage, jusqu'à ce que l'ensemble de levage (1) s'abaisse, la pression de délestage sur la soupape (44) de limitation de la pression au délestage étant ensuite augmentée d'une différence de pression prédéterminée.

18. Procédé selon l'une des revendications 11 à 17, dans lequel la régulation de pression au délestage est débranchée par actionnement d'un bouton-poussoir externe.

19. Procédé selon l'une des revendications 11 à 18, dans lequel le débit volumique au délestage est réglé par l'intermédiaire du diaphragme de dosage à moins de 50 l/min et de préférence à environ 10 l/min.
